# DEMANDE DE BREVET EUROPEEN

(11) **EP 2 444 133 A1**
(43) Date de publication de la demande: **25.04.2012**
(21) Numéro de dépôt: 10306139.6
(22) Date de dépôt: 19.10.2010
(51) Int. Cl.: A63F 13/10, A63F 13/12

(54) **Procédé de sauvegarde de l'état d'une partie d'un jeu et procédé de restauration du jeu correspondant**

(71) Demandeur: Gemalto SA, 92190 Meudon (FR)
(72) Inventeur: Seheux, Fabien, 13600, LA CIOTAT (FR); Martinent, Jean-François, 13600, LA CIOTAT (FR)

(57) **Abrégé**

L'invention concerne notamment un procédé de sauvegarde de l'état d'une partie d'un jeu joué par au moins deux joueurs (10, 11), le jeu comprenant des éléments de jeu (12, 13, 14, 15, 22, 23) à puces aptes à communiquer sans contact avec un terminal (17) via une interface 16). Le terminal (17) comprend un écran (18), le jeu consistant à présenter les éléments de jeu (12, 13, 14, 15, 22, 23) à l'interface, chaque joueur (10, 11) étant identifié par le terminal (17) par un élément de jeu (12, 13, 14, 15, 22, 23) appelé élément maître (22, 23).

Selon l'invention, le procédé de sauvegarde consiste à :
- enregistrer l'historique du déroulement de la partie de jeu,
- enregistrer les éléments de jeu qui n'ont éventuellement pas été joués (14),
- enregistrer les éléments de jeu (12, 13) en possession des joueurs (10, 11) au moment de l'interruption de la partie à l'aide des éléments maîtres (22, 23), de manière à pouvoir ultérieurement reprendre la partie dans le même état qu'elle était lors de son interruption.

## Description

Le domaine de l'invention est celui des jeux électroniques (de cartes ou de plateau) faisant appel à des éléments de jeu sans contact, tels que des cartes sans contact ou des figurines sans contact. Plus précisément, la présente invention concerne un procédé de sauvegarde de l'état d'une partie d'un jeu joué par au moins deux joueurs avec de tels éléments de jeu.

Depuis l'avènement des jeux électroniques sur ordinateur, sur smartphone ou en ligne, de nouveaux types de nouveaux jeux sont récemment apparus sur le marché.

Les inventeurs de la présente demande ont imaginé de faire appel à des éléments de jeu sans contact, tels que des cartes sans contact par exemple, représentant des personnages, des armes, des moyens de défense, des moyens de locomotion, mis à la disposition des joueurs pour qu'ils puissent atteindre un but qui peut être s'emparer d'une région, d'un royaume ou de s'emparer d'un trésor.

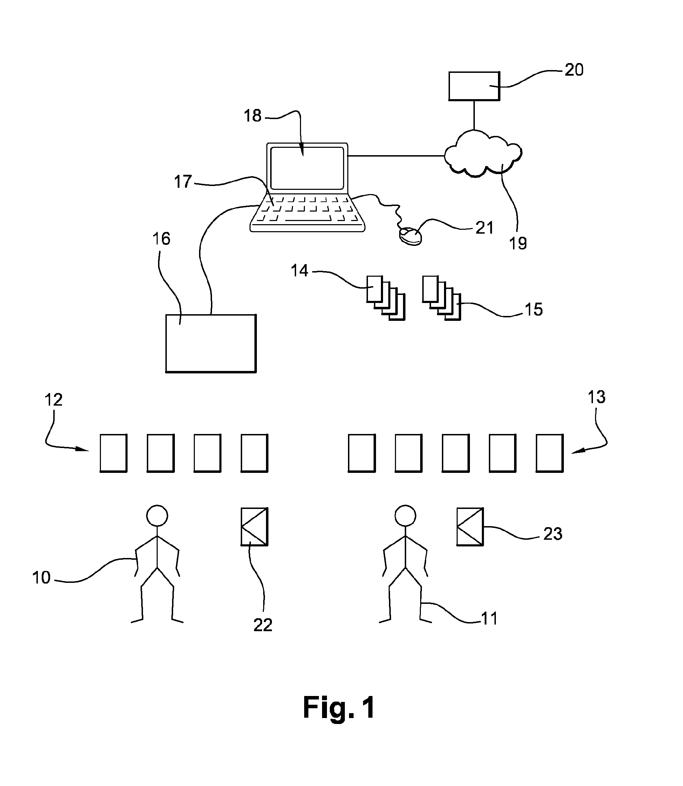

La figure 1 est une vue schématique d'un tel jeu.

Deux joueurs 10 et 11 utilisent des cartes de jeu 12 à 15 pour s'affronter. Les cartes 12 représentent la main du joueur 10 et les cartes 13 celle du joueur 11. Le joueur 10 n'a pas connaissance de la main 13 du joueur 11 et, réciproquement, le joueur 11 n'a pas connaissance de la main 12 du joueur 10. Le jeu comporte également une pioche 14 ainsi qu'éventuellement une défausse 15.

Une interface sans contact 16 est reliée à un terminal 17 pourvu d'un écran 18. Un logiciel de jeu est à cet effet installé sur le terminal 17 ou alors le terminal 17 est connecté à un serveur distant 20 via Internet 19 et les joueurs jouent en ligne. Le jeu peut être contrôlé à l'aide d'une souris 21.

Le jeu consiste par exemple pour chaque joueur à poser tour à tour une de ses cartes de jeu 12 et 13 sur l'interface 16. Le joueur 10 joue une de ses cartes 12 puis le joueur 11 joue une de ses cartes 13. C'est ensuite à nouveau le tour du joueur 10 puis du joueur 11 et ainsi de suite. Lorsqu'un joueur ne peut pas jouer une de ses cartes, il en prend une dans la pioche 14. Si le nombre des cartes d'un joueur devient trop important, il peut se défausser en remettant une carte dans la défausse 15.

Les règles du jeu peuvent être très variables : lorsqu'un joueur pose une carte représentant une arme sur l'interface 10, il dispose par exemple d'un pouvoir supérieur à celui de l'autre joueur qui ne dispose pas du moyen de défense adéquat lui permettant de bien contrer une attaque réalisée avec cette arme. Il peut en revanche riposter avec une autre arme ou utiliser un moyen de locomotion rapide lui permettant de récupérer le moyen de défense idoine à un autre endroit que celui où il se trouve.

Chaque joueur peut également avoir à jouer successivement plusieurs de ses cartes. Il dispose à cet effet d'un élément de jeu appelé élément maître (une carte spéciale) lui permettant de s'identifier auprès du jeu. La carte maître du joueur 10 est référencée 22 et celle du joueur 11 est référencée 23. Ces cartes maîtres 22, 23 peuvent être posées sur l'interface 16 avant de jouer une des cartes de jeu 12 ou 13 respectivement. Si l'interface 16 dispose d'un système d'anticollision, la carte maître peut être jouée en même temps que la carte de jeu du joueur correspondant, le jeu reconnaissant alors automatiquement le joueur et la carte qu'il a jouée.

Le jeu s'écoule ainsi normalement jusqu'à sa fin (il s'achève en principe par la victoire d'un des joueurs). Le gagnant peut alors poser sa carte maître sur l'interface 16 et celle-ci se voit créditée d'un nombre de points plus important, le joueur ayant gagné en expérience, force ou habileté par exemple.

La valeur d'une carte maître évolue ainsi dans le temps (il peut en être de même pour une carte de personnage), en fonction des expériences de jeu vécues par son détenteur et de l'issue du jeu. Si son détenteur est victorieux à l'issue d'une partie, par exemple suite à un combat acharné lors duquel il a subi des blessures, son crédit de points "santé" sera défavorablement affecté du fait des blessures mais il aura gagné en force et en expérience. Si en revanche son détenteur a perdu une partie, sa notoriété en sera affectée, ainsi que son état de santé et son moral.

Le problème posé par ce type de jeux est lorsqu'il doit être interrompu : par exemple si un des joueurs doit abandonner le jeu parce que celui-ci s'est trop prolongé dans la soirée ou parce qu'il a d'autres obligations urgentes, il se voit obligé de cesser de jouer, avec bien entendu l'accord de son partenaire de jeu. Le terminal 17 doit alors être éteint et les cartes rangées. La partie commencée est alors perdue, l'environnement crée également et les expériences de jeu, forces, niveaux de vie, etc. ne sont pas conservées. Il n'est en effet pas possible de prendre une photographie du jeu au moment de son interruption car les cartes qui ont été jouées peuvent avoir une influence sur la suite du jeu, pendant une durée plus longue qu'un tour. A titre d'exemple, une carte jouée à un moment donné par un joueur peut donner plus de force à ce joueur pendant 3, 5, voire 10 tours. Une photographie de l'état de jeu ne permet donc pas de rendre compte du véritable état du jeu car certains effets dus aux cartes jouées peuvent perdurer dans le temps.

La présente invention a notamment pour objectif de remédier à cet inconvénient.

Plus précisément, un des objectifs de l'invention est de permettre à des joueurs participant à un jeu électronique faisant appel à des éléments de jeu sans contact, par exemple des cartes sans contact, de sauvegarder l'état exact du jeu au moment de son interruption afin de pouvoir le restaurer ultérieurement pour pouvoir reprendre la partie de jeu dans la configuration dans laquelle se trouvait le jeu au moment de son interruption.

Cet objectif, ainsi que d'autres qui apparaîtront par la suite, est atteint grâce à un procédé de sauvegarde de l'état d'une partie d'un jeu joué par au moins deux joueurs, le jeu comprenant des éléments de jeu à puces aptes à communiquer sans contact avec un terminal via une interface, le terminal comprenant un écran. Le jeu consiste à présenter les éléments de jeu à l'interface, chaque joueur étant identifié par le terminal par un élément de jeu appelé élément maître. Selon l'invention, le procédé de sauvegarde consiste à :
- enregistrer l'historique du déroulement de la partie de jeu,
- enregistrer les éléments de jeu qui n'ont éventuellement pas été joués,
- enregistrer les éléments de jeu en possession des joueurs au moment de l'interruption de la partie à l'aide des éléments maîtres, de manière à pouvoir ultérieurement reprendre la partie dans le même état qu'elle était lors de l'interruption.

Dans un mode de mise en oeuvre avantageux, les éléments de jeu sont constitués par des cartes sans contact comportant chacune un graphique (graphisme).

Avantageusement, l'enregistrement des éléments de jeu qui n'ont pas été joués comprend l'enregistrement des éléments de jeu compris dans une pioche.

Dans un mode de mise en oeuvre préférentiel, les enregistrements sont réalisés dans l'une des cartes maîtres.

Dans un mode de mise en oeuvre alternatif, les enregistrements sont partagés entre les cartes maîtres des joueurs.

Selon une variante, les enregistrements sont réalisés au niveau du terminal.

Les enregistrements peuvent également être réalisés au niveau d'un serveur auquel le terminal est connecté.

Le procédé selon l'invention peut également comprendre une étape de sauvegarde des éléments de jeu qui ont été joués dans une défausse.

L'invention concerne également un procédé de restauration d'une partie d'un jeu joué par au moins deux joueurs, le jeu comprenant des éléments de jeu à puces aptes à communiquer sans contact avec un terminal via une interface, le terminal comprenant un écran. Le jeu consiste à présenter les éléments de jeu à l'interface, chaque joueur étant identifié par le terminal par un élément de jeu appelé élément maître, le procédé de restauration consistant à :
- restaurer l'historique du déroulement de la partie de jeu,
- identifier les éléments de jeu qui n'ont éventuellement pas été joués,
- identifier les éléments de jeu à affecter à chacun des joueurs à l'aide des éléments maîtres.

D'autres caractéristiques et avantages de la présente invention apparaîtront à la lecture de la description suivante d'un mode de mise en oeuvre préférentiel, donné à titre illustratif et non limitatif, et des dessins annexés dans lesquels :
- la figure 1 est une vue schématique d'un jeu électronique pour lequel le procédé selon la présente invention peut s'appliquer ;
- la figure 2 est un diagramme représentant les différentes étapes du procédé de sauvegarde selon l'invention ;
- la figure 3 est un diagramme représentant les différentes étapes du procédé de restauration selon l'invention.

Dans la description suivante, on se placera dans le cadre d'un jeu de cartes tel que celui décrit en référence à l'état de la technique à la figure 1. L'invention n'est cependant pas limitée à un tel jeu de cartes et s'applique de manière générale à tout jeu joué par au moins deux joueurs qui manipulent des éléments de jeu à puce aptes à communiquer sans contact avec un terminal via une interface. À titre d'exemple, les éléments de jeu peuvent être constitués par des pions ou figurines pourvus de tags passifs ou actifs qui peuvent être lus par l'interface sans contact. Ces tags peuvent éventuellement comprendre chacun un microprocesseur.

L'interface sans contact peut par exemple se présenter sous la forme d'un tapis sans contact que l'on peut dérouler et relier et à un terminal pourvu d'un écran. Ce tapis comporte par exemple plusieurs zones de jeu, une antenne étant prévue sous chaque zone de jeu pour lire et/ou écrire des données à partir de ou vers les éléments de jeu sans contact.

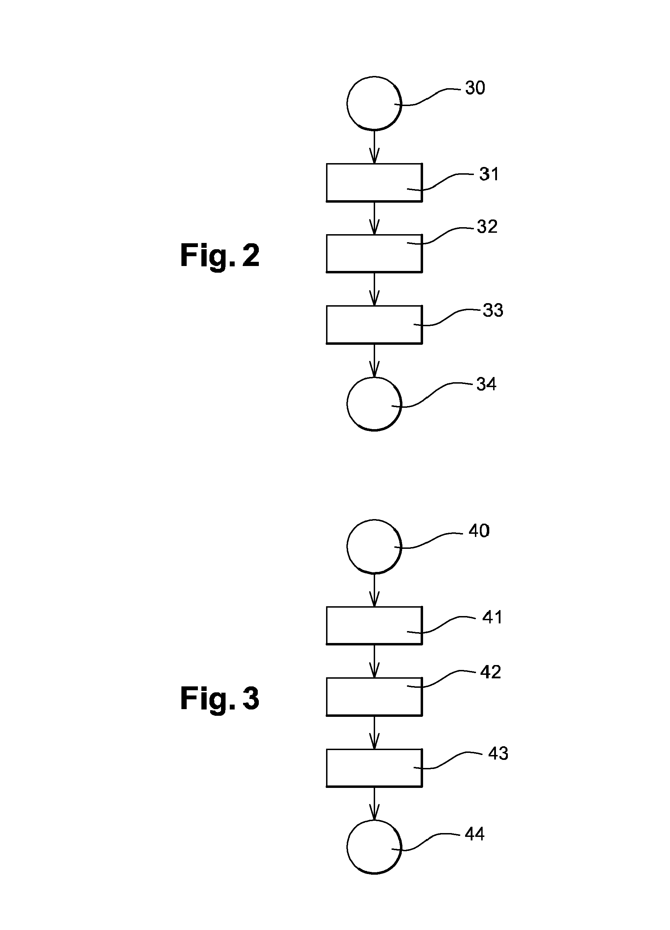

La figure 2 est un diagramme représentant les différentes étapes du procédé de sauvegarde selon l'invention.

On rappelle que chaque joueur est identifié par le terminal par un élément de jeu appelé élément maître, cette carte (carte du joueur) appartenant à un joueur et lui étant propre. Elle est donc à distinguer des autres cartes qui sont des cartes à jouer.

L'étape 30 est une étape de début.

Au moment où les joueurs décident d'interrompre le jeu, ils interagissent avec le terminal 17, par exemple à l'aide de la souris 21, pour indiquer à celui-ci que le jeu doit être interrompu. Le terminal 17 procède alors à un enregistrement, lors d'une étape 31, de l'historique du déroulement de la partie de jeu. Cet enregistrement peut être réalisé au fur et à mesure du déroulement du jeu qui a été interrompu. Lors d'une étape 32, on procède à un enregistrement des éléments de jeu qui n'ont éventuellement pas été joués, comme par exemple la pioche. Cet enregistrement peut consister à déposer successivement sur l'interface sans contact tous les éléments de jeux qui n'ont pas été joués. Les joueurs interagissent avec le terminal 17 à l'aide de la souris pour lui indiquer qu'ils vont par exemple commencer par la pioche et déposent sur l'interface sans contact chacune des cartes constituant cette pioche. Optionnellement, une fois les cartes de la pioche enregistrées, les joueurs indiquent au terminal qu'ils vont maintenant enregistrer les cartes de la défausse (cartes jouées) et posent chacune des cartes de cette défausse sur l'interface sans contact.

Une autre manière de procéder consiste à déposer dans un premier temps toutes les cartes de la pioche sur l'interface sans contact et dans un deuxième temps celles de la défausse. L'interface sans contact est alors pourvue d'un système d'anticollision permettant d'identifier chacune des cartes constituant le paquet posé sur cette interface. Après cette étape 32, le terminal 17 connaît toutes les cartes de la pioche et de la défausse.

Lors d'une étape 33, on procède à un enregistrement des éléments de jeu en possession des joueurs au moment de l'interruption de la partie à l'aide des éléments maîtres. Cette étape peut consister à identifier tout d'abord l'un des joueurs à l'aide de sa carte de maître puis à identifier chacune des cartes contenues dans sa main. On procède ensuite de même pour chacun des autres joueurs. Une autre manière de procéder consiste à poser sur l'interface sans contact la carte de maître d'un joueur ainsi que celles constituant sa main. Une fois la carte maître et la main reconnue, on enregistre la carte maître et les cartes constituant la main de chacun des autres joueurs.

L'étape 34 est une étape de fin.

Le terminal 17 enregistre de cette manière non seulement (à la manière d'une photographie) l'état du jeu au moment de son interruption, mais également l'historique du déroulement de la partie du jeu (à la manière d'un film). Il est dès lors possible de restaurer ultérieurement et fidèlement l'état du jeu tel qu'il était au moment de l'interruption.

Dans un premier mode de mise en oeuvre de l'invention, le jeu partiel reste stocké au niveau du terminal 17. Le jeu pourra donc être repris par les joueurs ultérieurement lorsqu'ils se retrouveront autour de ce terminal.

Dans un deuxième mode de mise en oeuvre de l'invention, le jeu partiel est stocké au niveau d'un serveur Internet. Les joueurs pourront alors télécharger le jeu mémorisé sur un autre terminal afin de poursuivre leur partie.

Dans un troisième mode de mise en oeuvre de l'invention, le jeu partiel, après avoir été stocké au niveau du terminal 17, est transféré dans une des cartes maîtres. Lorsque les joueurs se retrouveront, le jeu partiel sera copié de la carte maître stockant le jeu partiel vers un terminal de jeu.

Dans un quatrième mode de mise en oeuvre de l'invention, le jeu partiel est enregistré en partie dans chacune des cartes maîtres. De cette manière il ne pourra être poursuivi que lorsque les mêmes joueurs se retrouveront autour d'un terminal de jeu.

Le jeu partiel mémorisé peut être chiffré, par exemple par les clés publiques des joueurs.

La figure 3 est un diagramme représentant les différentes étapes du procédé de restauration selon l'invention.

On se place ici dans le cadre d'une reprise d'un jeu précédemment interrompu et enregistré, par exemple tel qu'il se trouve lors de l'étape de fin 34 de la figure 2.

L'étape 40 est une étape de début.

Lors d'une étape 41, l'historique du déroulement de la partie de jeu interrompue est restauré. Cette restauration peut s'effectuer en partant d'un enregistrement au niveau du terminal, d'un serveur Internet auquel est connecté un terminal, d'une carte maître ou des cartes maîtres des différents joueurs, comme vu précédemment.

Afin de sécuriser l'accès au jeu, une authentification des joueurs peut être demandée par le terminal ou le serveur. Dans ce cas, les joueurs s'authentifient grâce à leurs cartes maîtres et/ou à l'aide de mots de passe (codes PIN).

La restauration de cet historique permet aux joueurs d'écarter les éléments de jeu déjà joués lors de la partie interrompue. Ils sont par exemple affichés sur l'écran du terminal.

Lors d'une étape 42, les éléments de jeu qui n'ont éventuellement pas été joués sont identifiés. Ces éléments de jeu sont par exemple affichés sur l'écran du terminal afin que les joueurs puissent les mettre de côté (sur une pioche et/ou une défausse).

Lors d'une étape 43, les éléments de jeu à affecter à chacun des joueurs sont identifiés. Cette identification est réalisée à l'aide des éléments maîtres, par exemple dans le cas de cartes selon le scénario suivant : un premier joueur approche sa carte maître de l'interface sans contact pour s'identifier. Il présente ensuite à l'interface une à une les cartes restantes (celles des mains de tous les joueurs). Ces présentations sont réalisées en présentant le graphisme de la carte tourné vers l'interface, afin que les joueurs ne voient pas les cartes des différentes mains. Le terminal indique lors de la présentation de chaque carte si celle-ci appartient ou non à la main de ce premier joueur. Le premier joueur conserve les cartes constitutives de sa main et écarte celles qui ne lui reviennent pas. Une fois que le premier joueur a reconstitué sa main, vient le tour du deuxième joueur (qui procède de même avec les cartes écartées par le premier joueur), et ce jusqu'au dernier joueur. De cette manière, chaque joueur peut récupérer sa main sans que les autres joueurs ne puissent en prendre connaissance.

Dans un autre mode de mise en oeuvre, chaque carte est présentée à l'interface sans contact et le terminal indique à quel joueur elle doit revenir (les joueurs se sont précédemment tous identifiés).

L'étape 43 est suivie d'une étape de fin 44 correspondant au rétablissement de la situation du jeu telle qu'elle était lors de son interruption et le jeu peut alors reprendre.

Dans un mode de mise en oeuvre particulier, un mot de passe est affecté à chaque partie enregistrée, de sorte que plusieurs parties du même jeu (joué entre les mêmes joueurs ou entre d'autres joueurs) peuvent être enregistrées. Un même personnage d'un jeu aura ainsi différents niveaux mais pour des parties jouées différentes. Un joueur peut ainsi commencer plusieurs parties du même jeu avec le même partenaire de jeu (ou un autre partenaire de jeu) sans qu'aucune des parties ne soit terminée et également restaurer la partie qu'ils décident de poursuivre.

L'invention s'applique également aux jeux d'argent sans risque entre deux parties. Une partie commencée entre Alice et Bob ne pourra être que poursuivie entre Alice et Bob.

L'invention permet également de proposer des decks de jeu à la vente, avec des cartes à jouer (personnages) ayant différents niveaux (plus le niveau de la carte à jouer est important, plus son prix est élevé). Il est également possible de vendre des parties fictives à restaurer par des joueurs, avec des cartes ad-hoc.

L'achat de parties chiffrées par PKI (par la clé publique de l'acheteur) est également imaginable.

## Revendications

1. Procédé de sauvegarde de l'état d'une partie d'un jeu joué par au moins deux joueurs (10, 11), ledit jeu comprenant des éléments de jeu (12, 13, 14, 15, 22, 23) à puces aptes à communiquer sans contact avec un terminal (17) via une interface (16), ledit terminal (17) comprenant un écran (18), ledit jeu consistant à présenter lesdits éléments de jeu (12, 13, 14, 15, 22, 23) à ladite interface, chaque joueur (10, 11) étant identifié par ledit terminal (17) par un élément de jeu (12, 13, 14, 15, 22, 23) appelé élément maître (22, 23), ledit procédé de sauvegarde consistant à:
- enregistrer l'historique du déroulement de ladite partie de jeu,
- enregistrer les éléments de jeu qui n'ont éventuellement pas été joués (14),
- enregistrer les éléments de jeu (12, 13) en possession desdits joueurs (10, 11) au moment de l'interruption de ladite partie à l'aide desdits éléments maîtres (22, 23),
de manière à pouvoir ultérieurement reprendre ladite partie dans le même état qu'elle était lors de ladite interruption.

2. Procédé selon la revendication 1, **caractérisé en ce que** lesdits éléments de jeu (12, 13, 14, 15, 22, 23) sont constitués par des cartes sans contact comportant chacune un graphique.

3. Procédé selon l'une des revendications 1 et 2, **caractérisé en ce que** l'enregistrement des éléments de jeu qui n'ont pas été joués (14) comprend l'enregistrement des éléments de jeu compris dans une pioche (14).

4. Procédé selon l'une des revendications 1 à 3, **caractérisé en ce que** lesdits enregistrements sont réalisés dans l'une desdites cartes maîtres (22, 23).

5. Procédé selon l'une des revendications 1 à 3, **caractérisé en ce que** lesdits enregistrements sont partagés entre les cartes maîtres (22, 23) desdits joueurs (10, 11 ).

6. Procédé selon l'une des revendications 1 à 3, **caractérisé en ce que** lesdits enregistrements sont réalisés au niveau dudit terminal (17).

7. Procédé selon l'une des revendications 1 à 3, **caractérisé en ce que** lesdits enregistrements sont réalisés au niveau d'un serveur (20) auquel ledit terminal (17) est connecté.

8. Procédé selon l'une des revendications 1 à 7, **caractérisé en ce qu'**il comprend également une étape de sauvegarde des éléments de jeu qui ont été joués dans une défausse (15).

9. Procédé de restauration d'une partie d'un jeu joué par au moins deux joueurs (10, 11), ledit jeu comprenant des éléments de jeu à puces (12, 13, 14, 15, 22, 23) aptes à communiquer sans contact avec un terminal (17) via une interface (16), ledit terminal (17) comprenant un écran (18), ledit jeu consistant à présenter lesdits éléments de jeu (12, 13, 14, 15, 22, 23) à ladite interface (16), chaque joueur (10, 11) étant identifié par ledit terminal (17) par un élément de jeu appelé élément maître (22, 23), ledit procédé de restauration consistant à :
- restaurer l'historique du déroulement de ladite partie de jeu,
- identifier les éléments de jeu qui n'ont éventuellement pas été joués (14),
- identifier les éléments de jeu (12, 13) à affecter à chacun desdits joueurs (10, 11 ) à l'aide desdits éléments maîtres (22, 23).

10. Procédé selon la revendication 9, **caractérisé en ce que** lesdits éléments de jeu (12, 13, 14, 15, 22, 23) sont constitués par des cartes sans contact comportant chacune un graphique.
